# EUROPÄISCHE PATENTSCHRIFT

(11) **EP 2 280 863 B1**
(45) Veröffentlichungstag und Bekanntmachung des Hinweises auf die Patenterteilung: **26.12.2012**
(21) Anmeldenummer: 09749788.7
(22) Anmeldetag: 18.05.2009
(51) Int. Cl.: B63H 21/14, H02K 7/02, H02K 7/18, B63H 21/20, B60K 6/48, B60K 6/485, H02K 1/18

(54) **ANTRIEBSVORRICHTUNG MIT EINER VERBRENNUNGSKRAFTMASCHINE UND EINEM SCHWUNGRAD MIT ELEKTRISCHER MASCHINE**
DRIVE DEVICE COMPRISING AN INTERNAL COMBUSTION ENGINE AND A FLYWHEEL WITH AN ELECTRIC MACHINE
DISPOSITIF D'ENTRAÎNEMENT AVEC UN MOTEUR À COMBUSTION INTERNE ET UN VOLANT D' INERTIE AVEC MACHINE ÉLECTRIQUE

(30) Priorität: 21.05.2008 DE 102008024541
(43) Veröffentlichungstag der Anmeldung: 09.02.2011
(73) Patentinhaber: Siemens Aktiengesellschaft, 80333 München (DE)
(72) Erfinder: SCHRÖDER, Dierk, 24238 Selent (DE)
(86) Internationale Anmeldenummer: PCT/EP2009/055975
(87) Internationale Veröffentlichungsnummer: WO 2009/141298

(56) Entgegenhaltungen:
- EP-A- 1 829 725
- WO-A-2007/075148
- AT-U1- 8 288
- DE-A1- 3 230 607
- DE-A1- 19 600 598
- DE-A1-102004 052 023

## Beschreibung

Die Erfindung betrifft eine Antriebsvorrichtung gemäß Oberbegriff des Patentanspruchs 1.

Das gattungsbildende Dokument DE 102004052023A1 offenbart eine Antriebsvorrichtung mit den Merkmalen des Oberbegriffs von Anspruch 1.

Antriebsvorrichtungen mit einer Verbrennungskraftmaschine zum Antrieb einer Welle weisen häufig ein an der Welle angeordnetes Schwungrad auf, das Ungleichförmigkeiten in der Rotation der Welle, hervorgerufen durch Zündvorgänge in der Verbrennungskraftmaschine, ausgleichen soll. In einer Vielzahl von Anwendungen derartiger Antriebsvorrichtungen, z.B. zum Antrieb von Rädern eines Kraftfahrzeuges oder eines Propeller eines Schiffes, ist mit der Abtriebswelle des Verbrenungsmotors zusätzlich zumindest eine elektrische Maschine gekoppelt. Hierbei kann es sich um einen Generator und/oder einen Elektromotor handeln. Die elektrische Maschine umfasst hierbei üblicherweise einen Stator und einen Rotor, die jeweils ein Erregersystem aufweisen (z.B. eine Wicklungsanordnung und/oder eine Anordnung von Permanentmagneten, die miteinander elektromagnetisch wechselwirken).

So weisen beispielsweise Kraftfahrzeuge einen mit einer Antriebswelle gekoppelten Generator (die sogenannte "Lichtmaschine") zur Erzeugung von Strom für elektrische Verbraucher und zum Laden einer Batterie an Bord des Kraftfahrzeuges auf. Weiterhin weisen sie einen mit der Welle gekoppelten Elektromotor (den sogenannten "Startermotor") zum Starten der Verbrennungskraftmaschine auf. Ein Kraftfahrzeug mit einem Hybridantrieb weist einen weiteren direkt oder indirekt mit der Welle gekoppelten relativ leistungsstarken Elektromotor zum Antrieb des Kraftfahrzeuges auf.

Bei Schiffen ist beispielsweise ein mit einer Propellerwelle gekoppelter Generator (ein sogenannter "Wellengenerator") zur Erzeugung von elektrischer Energie für das Bordnetz des Schiffes bekannt. Es sind auch mit der Propellerwelle gekoppelte Wellenmotoren bekannt, die beispielsweise zur Erzielung der Maximalgeschwindigkeit des Schiffes zusätzlich zur Verbrennungskraftmaschine Drehmoment auf die Propellerwelle abgeben können (die Elektromotoren werden dann als "Booster" bezeichnet) oder die als ein Notantrieb für das Schiff bei einem Ausfall der Verbrennungskraftmaschine genutzt werden.

Derartige Antriebsvorrichtungen können somit eine Vielzahl von mit der Welle gekoppelter Komponenten mit entsprechendem Platz- und Gewichtsbedarf umfassen. Es ist deshalb Aufgabe vorliegender Erfindung, den Platz- und Gewichtsbedarf einer derartigen Antriebsvorrichtung zu verringern. Es soll dabei auch eine bereits vorhandene Antriebsvorrichtung mit einer Verbrennungskraftmaschine und einem Schwungrad mit geringem Aufwand auf eine erfindungsgemäße Antriebsvorrichtung umrüstbar sein. Dies insbesondere dann, wenn die Antriebsvorrichtung in einem Maschinenraum, z.B. innerhalb eines Gebäudes oder Schiffes, angeordnet ist, der größere Umbauten aus Platzgründen nicht zulässt.

Die Lösung dieser Aufgabe gelingt durch eine Antriebsvorrichtung gemäß Patentanspruch 1. Vorteilhafte Ausgestaltungen sind jeweils Gegenstand der Unteransprüche 2 bis 9. Eine besonders vorteilhafte Verwendung der Antriebsvorrichtung ist Gegenstand des Patentanspruchs 10.

Erfindungsgemäß ist an dem Schwungrad ein Erregersystem angeordnet, wobei die Antriebsvorrichtung einen ringförmigen Stator umfasst, der derart um das Schwungrad angeordnet ist, dass er mit dem Schwungrad und dem Erregersystem eine elektrische Maschine bildet. Das Schwungrad bildet somit den Rotor der elektrischen Maschine. Folglich ist kein separater Rotor für die elektrische Maschine notwendig, wodurch Platz und Gewicht eingespart werden kann. Unter einem Schwungrad wird hierbei eine Komponente verstanden, die primär mit dem Ziel vorhanden ist, Drehungleichförmigkeiten der Welle auszugleichen. Das Schwungrad bzw. der Rotor kann dabei drehbar in dem ringförmigen Stator gelagert sein. Alternativ kann der Stator auch frei gegenüber der Welle aufgehängt sein. Der Stator kann hierzu beispielsweise auf einem Fundament ruhen und über das Fundament gegenüber der Welle frei aufgehängt sein. Eine abstützende Lagerung des Stators auf der Welle ist dagegen nicht notwendig und deshalb auch nicht vorgesehen. Die elektrische Maschine hat daher in Richtung der Drehachse der Welle im Vergleich zu einem Schwungrad nahezu keinen zusätzlichen Platzbedarf. Bei einer schon vorhandenen Antriebsvorrichtung muss nur das Erregersystem auf dem Schwungrad nachgerüstet und der ringförmige Stator um das Schwungrad herum angeordnet werden. Der ringförmige Stator kann dabei aus mehreren Ringsegmenten bestehen, die in Einzelteilen zu der Antriebsvorrichtung gebracht und dann dort vor Ort zu dem Statorring zusammengebaut werden können. Aufgrund der vorgenannten Vorteile können schon bestehende Antriebsvorrichtungen ohne größere Umbauten und Eingriffe in den Antriebsstrang auf erfindungsgemäße Antriebsvorrichtungen umgerüstet werden.

Das Erregersystem kann dabei an einer Umfangsseite des Schwungrades angeordnet sein. Eine Umfangsseite wird hierbei durch die äußere radiale Begrenzungsfläche des Schwungrades definiert. Hierdurch ist ein konstruktiv besonders einfacher Aufbau der elektrischen Maschine möglich.

Das Erregersystem kann aber auch an einer Stirnseite des Schwungrades angeordnet sein. Eine Stirnseite wird hierbei durch eine äußere axiale Begrenzungsfläche des Schwungrades definiert. Hierdurch kann der Durchmesser und somit der Platzbedarf der elektrischen Maschine in radialer Richtung etwas kleiner gehalten werden.

Das Erregersystem kann aber auch sowohl an der Umfangsseite als auch an einer oder beiden Stirnseiten des Schwungrades angeordnet sein. Hierdurch kann die aktive Fläche des Erregersystems und somit auch die Leistung der elektrischen Maschine vergrößert werden.

Die elektrische Maschine kann dabei derart ausgebildet sein, dass sie als Motor zum Antrieb des Schwungrades betreibbar ist. Eine derartige elektrische Maschine stellt dann im Grunde einen sogenannten Elektroringmotor (häufig auch als "RIM-Drive" bezeichnet) dar. Ein derartiger Motor kann aufgrund seines Kraftangriffes am Schwungrad mit seinem relativ großen Außendurchmesser ein besonders hohes Drehmoment erzielen. Dies gilt insbesondere, wenn es sich um einen permanentmagnetisch erregten Motor handelt, d.h. wenn das auf dem Schwungrad angeordnete Erregersystem aus einer Anordnung von Permanentmagneten besteht.

Die elektrische Maschine kann dann derart ausgelegt sein, dass durch sie im Motorbetrieb durch Antrieb des Schwungrades die Verbrennungskraftmaschine startbar ist. Die elektrische Maschine kann hierdurch als Startermotor für die Verbrennungskraftmaschine genutzt werden.

Zusätzlich oder alternativ kann die elektrische Maschine derart ausgelegt sein, dass bei einem Antrieb der Welle durch die Verbrennungskraftmaschine mittels der elektrischen Maschine im Motorbetrieb ein zusätzliches Drehmoment auf die Welle abgebbar ist. Die elektrische Maschine kann dann als Zusatzelektroantrieb, beispielsweise als "Booster" genutzt werden, wodurch ein Hybridantrieb entsteht.

Zusätzlich oder alternativ kann die elektrische Maschine auch derart ausgelegt sein, dass sie als von der Welle angetriebener Generator zur Versorgung zumindest eines elektrischen Verbrauchers oder Energiespeichers mit elektrischer Energie betreibbar ist. Aufgrund des relativ großen Durchmessers des Schwungrades und der dadurch bedingten relativ großen Relativgeschwindigkeit zwischen dem Stator und dem Schwungrad entstehen beim Generatorbetrieb in dem Stator schnell hohe Ströme. In einem Kraftfahrzeug kann die elektrische Maschine dann beispielsweise als Lichtmaschine genutzt werden. Bevorzugt ist die elektrische Maschine sowohl als Motor als auch als Generator betreibbar. In einem Kraftfahrzeug kann sie dann sowohl als Startermotor, als zusätzlicher Elektroantrieb und auch als Lichtmaschine genutzt werden. Auf diese Weise können die bisher separaten Komponenten Schwungrad, Generator, Startermotor und Elektrozusatzantrieb in einer einzigen Komponente zusammengefasst und folglich in besonders hohem Maße Platz und Gewicht eingespart werden.

Bevorzugt umfasst die Antriebsvorrichtung eine Regelungseinrichtung zur Regelung der Drehmomentabgabe der elektrischen Maschine an die Welle bzw. der Drehmomentaufnahme der elektrischen Maschine von der Welle derart, dass sie Drehungleichförmigkeiten der Welle entgegenwirkt. Somit können beispielsweise Anteile der auf den Zündfrequenzen der Verbrennungskraftmaschine beruhenden Drehungleichförmigkeiten aus der Rotation herausgefiltert werden.

Dies kann sogar dazu führen, dass die Verbrennungskraftmaschine über die Welle ohne eine zwischengeschaltete elastische Kupplung mit einer Last kuppelbar ist.

Bevorzugt ist das Schwungrad zwischen der Verbrennungskraftmaschine und einer Last auf der Welle angeordnet und eine Schaltkupplung ist zwischen der Verbrennungskraftmaschine und dem Schwungrad angeordnet, um die Verbrennungskraftmaschine von der Welle zu trennen. Hierdurch wird beispielsweise bei einem Ausfall der Verbrennungskraftmaschine ein Notantrieb mit niedriger Drehzahl durch die elektrische Maschine ermöglicht. Es ist auch möglich ein solches Schwungrad ohne Kupplung an die Abtriebsseite und/oder an die Rückseite der Verbrennungskraftmaschine zu montieren.

Wenn das Erregersystem und das Schwungrad eine integrale Einheit bilden, so dass das Schwungrad den Rotor bzw. Läufer der elektrischen Maschine bildet, kann der Platzbedarf der elektrischen Maschine in radialer Richtung besonders klein gehalten werden.

Aufgrund der geringen Platz- und Gewichtsanforderungen eignet sich die erfindungsgemäße Antriebsvorrichtung vor allem zur Verwendung in einem Fahrzeug, insbesondere in einem Kraftfahrzeug zum Antrieb von Rädern des Kraftfahrzeuges oder in einem Wasserfahrzeug zum Antrieb eines Propellers.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen teilweisen Längsschnitt durch eine Antriebsvorrichtung mit einem auf der Umfangsseite des Schwungrades angeordneten Erregersystem,
- FIG 2: einen teilweisen Längsschnitt durch eine Antriebsvorrichtung mit einem auf einer Stirnseite des Schwungrades angeordneten Erregersystem und
- FIG 3: einen teilweisen Längsschnitt durch eine Antriebsvorrichtung mit einem sowohl auf der Umfangsseite als auch auf den Stirnseiten des Schwungrades angeordneten Erregersystem.

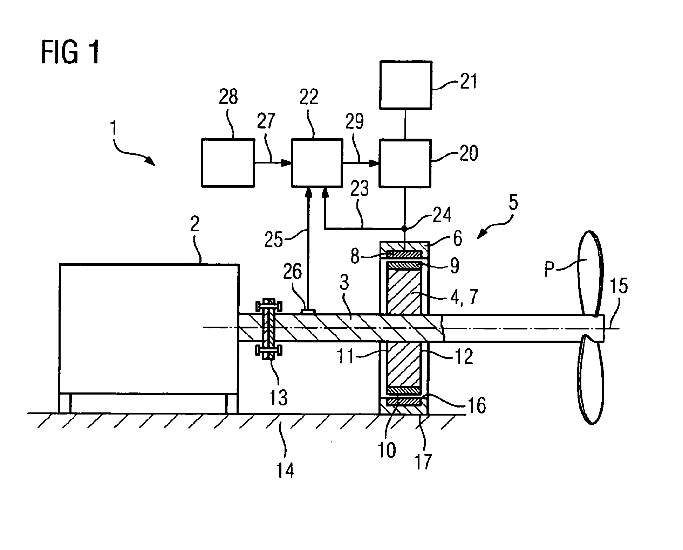

FIG 1 zeigt eine Antriebsvorrichtung 1 mit einer Verbrennungskraftmaschine 2 zum Antrieb einer Welle 3, die um eine Drehachse 15 drehbar ist. Die Welle 3 dient wiederum zum Antrieb einer Last, hier einen Propeller P eines Wasserfahrzeuges. Im Falle eines Kraftfahrzeuges kann es sich bei der Last beispielsweise auch um Räder des Kraftfahrzeuges handeln.

Ein Schwungrad 4 ist drehfest mit der Welle 3 verbunden und dient zum Ausgleich von Drehungleichförmigkeiten der Welle 3, die durch Zündvorgänge in der Verbrennungskraftmaschine 2 hervorgerufen werden. Das Schwungrad 4 ist dabei zwischen der Verbrennungskraftmaschine 2 und dem Propeller P angeordnet. Das Schwungrad 4 weist eine Umfangsseite 10 und eine erste und eine zweite Stirnseite 11 bzw. 12 auf. An der Umfangsseite 10 ist ein Erregersystem 9 angeordnet. Bei dem Erregersystem 9 kann es sich um eine Wicklungsanordnung oder um eine Anordnung von Permanentmagneten handeln.

Die Antriebseinrichtung 1 umfasst weiterhin einen Stator 6, der derart angeordnet ist, dass er mit dem Schwungrad 4 und dem darauf angeordneten Erregersystem 9 eine elektrische Maschine 5 bildet. An dem Stator 6 ist hierzu ebenfalls ein Erregersystem 8 angeordnet. Bei dem Erregersystem 8 handelt es sich beispielsweise um eine Wicklungsanordnung. Der Stator 6 ist ringförmig mit einer Ringinnenseite 16 und einer Ringaußenseite 17 ausgebildet, wobei das Erregersystem 8 an der Ringinnenseite 16 angeordnet ist. Das Erregersystem 8 und das Schwungrad 4 bilden dabei eine integrale Einheit, so dass das Schwungrad 4 den Rotor 7 bzw. Läufer der elektrischen Maschine 5 bildet.

Zwischen dem rotorseitigen Erregersystem 9 und dem statorseitigen Erregersystem 8, die nur durch einen kleinen Spalt voneinander getrennt angeordnet sind, findet beim Betrieb der elektrischen Maschine 5 eine elektromagnetische Wechselwirkung statt.

Die Verbrennungskraftmaschine 2 und der Stator 6 sind beide starr miteinander verbunden. Dies kann zum Beispiel, wie dargestellt, über ein Fundament, hier eine Bodenplatte 14, geschehen.

Eine abstützende Lagerung des Stators 6 auf der Welle 3 ist nicht vorhanden. Vielmehr ist das Schwungrad 4 bzw. der Rotor 7 über nicht näher dargestellte Lager um die Achse 15 drehbar in der Ringinnenseite 16 des Stators 6 gelagert. Alternativ kann der Stator 6 auch über die Bodenplatte 14 gegenüber der Welle 3 frei aufgehängt sein. Hierdurch ergibt sich eine in Richtung der Drehachse 15 sehr kurz bauende Anordnung.

Eine Lagerung der Welle 3 kann hierbei über nicht näher dargestellte Lager direkt an der Welle 3 oder aber auch durch eine drehbare Lagerung des Schwungrades 4 bzw. Rotors 7 in dem Stator 6 erfolgen.

Die elektrische Maschine 5 ist derart ausgebildet, dass sie sowohl als Motor zum Antrieb der Welle 3 als auch als von der Welle 3 angetriebener Generator betreibbar ist.

Die elektrische Maschine 5 ist dabei derart ausgelegt, dass durch sie im Motorbetrieb durch Antrieb der Welle 3 die Verbrennungskraftmaschine 2 startbar ist. Die elektrische Maschine 5 dient dann als Startermotor für die Verbrennungskraftmaschine 1.

Die elektrische Maschine 5 ist zusätzlich oder alternativ derart ausgelegt, dass bei einem Antrieb der Welle 3 durch die Verbrennungskraftmaschine 1 mittels der elektrischen Maschine 5 im Motorbetrieb ein zusätzliches Drehmoment auf die Welle 3 abgebbar ist. Die elektrische Maschine 5 dient dann beispielsweise als Boostermotor für die Verbrennungskraftmaschine 1.

In der Welle 3 ist zwischen der Verbrennungskraftmaschine 2 und dem Schwungrad 4 eine mechanisch starre Kupplung 13 angeordnet. Bei einem Ausfall der Verbrennungskraftmaschine 2 kann dann die Verbrennungskraftmaschine 2 von der Welle 3 getrennt werden, so dass ein Notantrieb mit geringer Drehzahl durch die elektrische Maschine 5 möglich ist.

Grundsätzlich kann die elektrische Maschine 5 natürlich nicht nur zum Starten der Verbrennungskraftmaschine 2 oder als Booster verwendet werden, sondern generell als Zusatzelektroantrieb verwendet werden und zusammen mit der Verbrennungskraftmaschine 2 einen Hybridantrieb bilden, bei dem in Abhängigkeit von bestimmten Parametern, wie z.B. dem Kraftstoffverbrauch, für bestimmte Drehzahl- oder Drehmomentbereiche die elektrische Maschine 5 im Verbund mit der Verbrennungskraftmaschine 2 oder alleine die Welle 3 antreibt.

Die elektrische Maschine 5 wird hierbei über einen Stromrichter 20 mit elektrischem Strom aus einer Batterie 21 versorgt. Natürlich ist auch eine Stromversorgung aus einem Bordnetz oder von einem Stromgenerator möglich.

Die elektrische Maschine 5 ist zusätzlich oder alternativ derart ausgebildet, dass sie als von der Welle 3 angetriebener Generator betreibbar ist. Die elektrische Maschine 5 lädt dann über den Stromrichter 20 die Batterie 21 oder eine andere geeignete Speichereinrichtung. Auch hier ist es natürlich denkbar, dass der Strom in ein Bordnetz statt in eine Batterie gespeist wird oder direkt zur Speisung einer elektrischen Last genutzt wird.

Eine Regelungseinrichtung 22 dient zur Regelung der Drehmomentabgabe der elektrischem Maschine 5 an die Welle 3 im Motorbetrieb bzw. der Drehmomentaufnahme der elektrischen Maschine 5 von der Welle 3 im Generatorbetrieb derart, dass Drehungleichförmigkeiten der Welle durch die Drehmomentabgabe bzw. Drehmomentaufnahme entgegenwirkt wird. Somit können beispielsweise Anteile der auf den Zündfrequenzen der Verbrennungskraftmaschine 2 beruhenden Drehungleichförmigkeiten aus der Rotation herausgefiltert werden. Dies kann sogar dazu führen, dass die Verbrennungskraftmaschine 2 ohne eine zwischengeschaltete elastische Kupplung mit einer Last, hier dem Propeller P, kuppelbar ist. Entsprechende Regelverfahren sind z.B. von der aktiven Schallauslöschung bekannt.

Die Regelungseinrichtung 22 ist hierzu über eine Signalleitung 25 mit einem an der Welle 3 angeordneten Sensor 26 verbunden und erfasst hierüber auf direktem Weg Signale, die die Drehungleichförmigkeiten der Welle 3 repräsentieren. Beispielsweise kann es sich bei dem Sensor 26 um ein Mikrofon handeln, da sich Drehungleichförmigkeiten in dem von der Welle 3 abgestrahlten Schall niederschlagen. Entsprechende Daten können alternativ und/oder ergänzend auch über eine Signalleitung 27 aus einer Einspritz- oder Zündanlage 28 der Verbrennungskraftmaschine 2, z.B. durch Auswertung der Zündzeitpunkte und/oder Einspritzmengen des Luft-Kraftstoffgemisches, gewonnen werden.

Drehungleichförmigkeiten der Welle 3 schlagen sich aber auch in dem Strom nieder, der der elektrischen Maschine 5 über den Stromrichter 20 im Motorbetrieb zugeführt bzw. ihr im Generatorbetrieb über den Stromrichter 20 abgeführt wird. Die Regelungseinrichtung 22 ist deshalb zusätzlich oder alternativ über eine Signalleitung 23 mit einem Stromsensor 24 zur Messung des der Maschine 5 zugeführten bzw. abgeführten Stromes verbunden.

Die von dem Sensor 24, dem Sensor 26 und/oder von der Einspritz- oder Zündanlage 28 erhaltenen Signale werden in der Regelungseinrichtung 22 verarbeitet und daraus Regelsignale für den Stromrichter 20 erzeugt, über den der der elektrischen Maschine 5 zugeführte bzw. abgeführte Strom geregelt wird. Die Regelungseinrichtung 22 ist hierzu über eine Leitung 29 mit dem Stromrichter 20 verbunden.

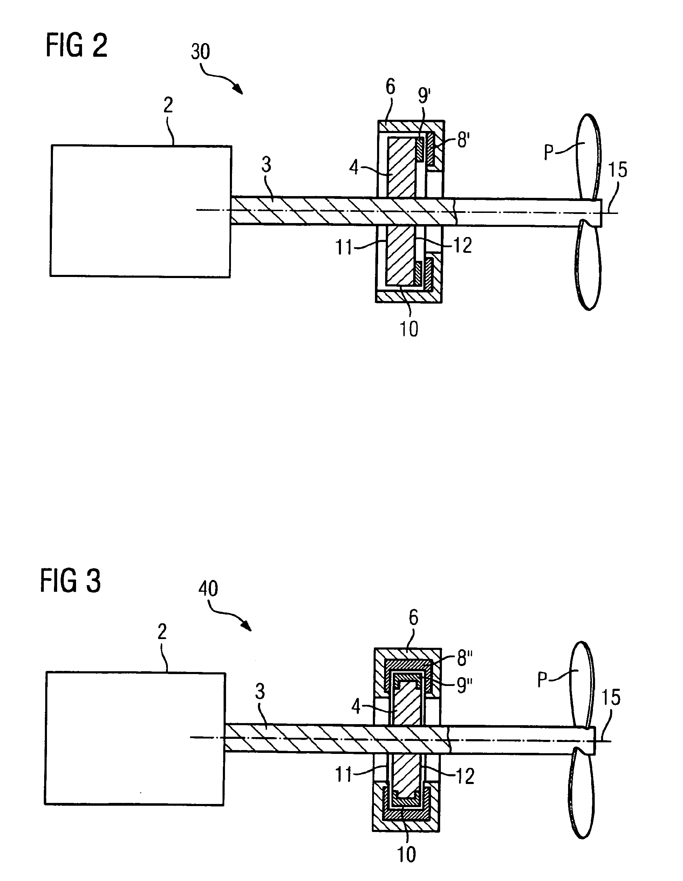

Eine in FIG 2 vereinfacht gezeigte Antriebsvorrichtung 30 unterscheidet sich von der in FIG 1 gezeigten Antriebsvorrichtung dadurch, dass sie ein rotorseitiges Erregersystem 9' aufweist, das in einem radial äußeren Bereich auf der der Verbrennungskraftmaschine 2 abgewandten Stirnseite 12 statt auf der Umfangsseite 10 des Schwungrades 4 angeordnet ist. In entsprechender Weise ist das statorseitige Erregersystem 8' auf einer dem Schwungrad 4 zugewandten inneren Stirnseite des Stators 6 angeordnet. Hierdurch kann der Durchmesser der elektrischen Maschine 5 und somit der Platzbedarf der Antriebsvorrichtung 1 in radialer Richtung bei gleicher elektrischer Leistung etwas kleiner gehalten werden.

Eine in FIG 3 gezeigte Antriebsvorrichtung 40 unterscheidet sich von den in FIG 1 und FIG 2 gezeigten Antriebsvorrichtungen 1 bzw. 30 dadurch, dass sie ein rotorseitiges Erregersystem 9" aufweist, das sowohl an der Umfangsseite 10 als auch in einem radial äußeren Bereich an beiden Stirnseite 12 des Schwungrades 4 angeordnet ist. Das Erregersystem 9" weist somit im Querschnitt ein U-Profil auf. In entsprechender Weise weist das statorseitige Erregersystem 8" im Querschnitt ebenfalls ein U-Profil auf. Hierdurch können bei vergleichsweise etwas größerem Platzbedarf der elektrischen Maschine 3 die aktiven Flächen auf Rotor- und Ständerseite und somit auch die Leistung der elektrischen Maschine 3 vergrößert werden.

Mit der Erfindung können somit die Komponenten Schwungrad, Startermotor, Generator (Lichtmaschine) und/oder Zusatzelektroantrieb (z.B. Boosterantrieb) in einer einzigen Komponente zusammengefasst werden. Hierdurch sind enorme Einsparungen hinsichtlich Platz- und Gewichtsbedarf bei einer Antriebsvorrichtung mit einem Schwungrad möglich.

Schon bestehende Antriebsvorrichtungen können ohne größere Umbauten und Eingriffe in den Antriebsstrang auf erfindungsgemäße Antriebsvorrichtungen umgerüstet werden. Dies kann beispielsweise dadurch geschehen, dass an der Außenseite eines schon vorhandenen Schwungrades ein Erregersystem nachgerüstet, der ringförmige Stator um das Schwungrad herum gelegt und an dem Fundament der Verbrennungskraftmaschine befestigt wird. Der ringförmige Stator kann dabei aus mehreren Ringsegmenten bestehen, die in Einzelteilen zu der Antriebsvorrichtung gebracht und dann dort vor Ort zu dem Statorring zusammengebaut werden können.

Besonders vorteilhaft ist die elektrische Maschine 5 als eine HTS(Hochtemperatursupraleiter)-Maschine ausgeführt. Besonders vorteilhaft ist hierbei, wenn die HTS-Maschine mit einer "heißen Welle" ausgeführt ist, d.h. die Wicklungen des statorseitigen Erregersystems 8, 8', 8" bestehen aus Hochtemperatursupraleitern, die zu ihrer Kühlung in einem Kryostaten angeordnet sind, während die Wicklungen des rotorseitigen Erregersystems 9, 9', 9" aus konventionellen, d.h. nicht supraleitenden, Leitern bestehen.

## Patentansprüche

1. Antriebsvorrichtung (1, 30, 40) mit einer Verbrennungskraftmaschine (2) zum Antrieb einer Welle (3) und einem an der Welle (3) angeordneten Schwungrad (4) zum Ausgleich von Drehungleichförmigkeiten der Welle (3), wobei an dem Schwungrad (4) ein Erregersystem (9) angeordnet ist und wobei die Antriebsvorrichtung (1, 30, 40) einen ringförmigen Stator (6) umfasst, der derart um das Schwungrad (4) angeordnet ist, dass er mit dem Schwungrad (4) und dem Erregersystem (9) eine elektrische Maschine (5) bildet, wobei das Schwungrad (4) drehbar in dem ringförmigen Stator (6) gelagert oder der Stator (6) frei gegenüber der Welle (3) aufgehängt ist, und mit einer Regelungseinrichtung (22) zur Regelung der Drehmomentabgabe der elektrischem Maschine (5) an die Welle (3) bzw. der Drehmomentaufnahme der elektrischen Maschine (5) von der Welle (3) derart, dass sie Drehungleichförmigkeiten der Welle (3) entgegenwirkt,
**dadurch gekennzeichnet, dass** die Regelungseinrichtung (22) zur Erfassung der Drehungleichförmigkeiten mit einem Stromsensor (24) zur Messung des der Maschine (5) zugeführten bzw. abgeführten Stromes verbunden ist.

2. Antriebsvorrichtung (1, 30, 40) nach Anspruch 1,
**dadurch gekennzeichnet, dass** das Erregersystem (9) an einer Umfangsseite (10) und/oder zumindest einer Stirnseite (11 bzw. 12) des Schwungrades (4) angeordnet ist.

3. Antriebsvorrichtung (1, 30, 40) nach einem der vorhergehenden Ansprüche, **dadurch gekennzeichnet, dass** die elektrische Maschine (5) derart ausgebildet ist, dass sie als Motor zum Antrieb der Welle (3) betreibbar ist.

4. Antriebsvorrichtung (1, 30, 40) nach Anspruch 3,
**dadurch gekennzeichnet, dass** die elektrische Maschine (5) derart ausgelegt ist, dass durch sie im Motorbetrieb durch Antrieb der Welle (3) die Verbrennungskraftmaschine (2) startbar ist.

5. Antriebsvorrichtung (1, 30, 40) nach Anspruch 3 oder 4, **dadurch gekennzeichnet, dass** die elektrische Maschine (5) zusätzlich oder alternativ derart ausgelegt ist, dass bei einem Antrieb der Welle (3) durch die Verbrennungskraftmaschine (2) mittels der elektrischen Maschine (5) im Motorbetrieb ein zusätzliches Drehmoment auf die Welle (3) abgebbar ist.

6. Antriebsvorrichtung (1, 30, 40) nach einem der vorhergehenden Ansprüche, **dadurch gekennzeichnet, dass** die elektrische Maschine (5) zusätzlich oder alternativ derart ausgelegt ist, dass sie als von der Welle (3) angetriebener Generator zur Versorgung zumindest eines elektrischen Verbrauchers oder Energiespeichers (21) mit elektrischer Energie betreibbar ist.

7. Antriebsvorrichtung (1, 30, 40) nach Anspruch 1,
**dadurch gekennzeichnet, dass** die Verbrennungskraftmaschine (2) über die Welle (3) ohne eine zwischengeschaltete elastische Kupplung mit einer Last (P) kuppelbar ist.

8. Antriebsvorrichtung (1, 30, 40) nach einem der vorhergehenden Ansprüche, **dadurch gekennzeichnet, dass** das Schwungrad (4) zwischen der Verbrennungskraftmaschine (2) und einer Last (P) auf der Welle (3) angeordnet ist und dass eine Kupplung (13) zwischen der Verbrennungskraftmaschine (2) und dem Schwungrad (4) angeordnet ist, um die Verbrennungskraftmaschine (2) von der Welle (3) zu trennen.

9. Antriebsvorrichtung (1, 30, 40) nach einem der vorhergehenden Ansprüche, **dadurch gekennzeichnet, dass** das Erregersystem (9) und das Schwungrad (4) eine integrale Einheit bilden, so dass das Schwungrad (4) den Rotor (7) der elektrischen Maschine (5) bildet.

10. Verwendung der Antriebsvorrichtung (1, 30, 40) nach einem der vorhergehenden Ansprüche in einem Fahrzeug, insbesondere in einem Kraftfahrzeug zum Antrieb von Rädern des Kraftfahrzeuges oder in einem Wasserfahrzeug zum Antrieb eines Propellers.

## Claims

1. Drive device (1, 30, 40) having an internal combustion engine (2) for driving a shaft (3) and a flywheel (4) disposed on the shaft (3) to compensate for rotational irregularities of the shaft (3), wherein an excitation system (9) is disposed on the flywheel (4) and the drive device (1, 30, 40) comprises a circular stator (6), which is disposed around the flywheel (4) in such a manner that it forms an electric machine (5) together with the flywheel (4) and the excitation system (9), the flywheel (7) being rotatably mounted in the circular stator (6) or the stator (6) being freely suspended relative to the shaft (3), and having a regulation facility (22) for regulating the torque output by the electric machine (5) to the shaft (3) or the torque applied to the electric machine (5) by the shaft (3) in such a manner that it counteracts rotational irregularities of the shaft (3),
**characterised in that** the regulation facility (22) is connected to a current sensor (24) for measuring the current supplied to or discharged from the machine (5), to detect the rotational irregularities.

2. Drive device (1, 30, 40) according to claim 1, **characterised in that** the excitation system (9) is disposed on a peripheral face (10) and/or at least one end face (11 or 12) of the flywheel (4).

3. Drive device (1, 30, 40) according to one of the preceding claims, **characterised in that** the electric machine (5) is configured in such a manner that it can be operated as a motor to drive the shaft (3).

4. Drive device (1, 30, 40) according to claim 3, **characterised in that** the electric machine (5) is designed in such a manner that it can start the internal combustion engine (2) during operation of the motor by driving the shaft (3).

5. Drive device (1, 30, 40) according to claim 3 or 4, **characterised in that** the electric machine (5) is additionally or alternatively designed in such a manner that when the shaft (3) is driven by the internal combustion engine (2), an additional torque can be output to the shaft (3) by means of the electric machine (5) during operation of the motor.

6. Drive device (1, 30, 40) according to one of the preceding claims, **characterised in that** the electric machine (5) is additionally or alternatively designed in such a manner that it can be operated as a generator driven by the shaft (3) to supply at least one electrical consumer or energy storage unit (21) with electrical energy.

7. Drive device (1, 30, 40) according to claim 1, **characterised in that** the internal combustion engine (2) can be coupled to a load (P) by way of the shaft (3) without any intermediate elastic coupling.

8. Drive device (1, 30, 40) according to one of the preceding claims, **characterised in that** the flywheel (4) is disposed between the internal combustion engine (2) and a load (P) on the shaft (3) and a coupling (13) is disposed between the internal combustion engine (2) and the flywheel (4) to separate the internal combustion engine (2) from the shaft (3).

9. Drive device (1, 30, 40) according to one of the preceding claims, **characterised in that** the excitation system (9) and the flywheel (4) form an integral unit so that the flywheel (4) forms the rotor (7) of the electric machine (5).

10. Use of the drive device (1, 30, 40) according to one of the preceding claims in a vehicle, in particular in a motor vehicle for driving wheels of the motor vehicle or in a water vessel for driving a propeller.

## Revendications

1. Dispositif ( 1, 30, 40 ) d'entraînement comprenant un moteur ( 2 ) à combustion interne pour l'entraînement d'un arbre ( 3 ) et un volant ( 4 ) monté sur l'arbre ( 3 ) pour la compensation de balourds de l'arbre ( 3 ), dans lequel un système ( 9 ) d'excitation est monté sur le volant ( 4 ) et le dispositif ( 1, 30, 40 ) d'entraînement comprend un stator ( 6 ) annulaire monté sur le volant ( 4 ) de manière à former avec le volant ( 4 ) et le système ( 9 ) d'excitation une machine ( 5 ) électrique, le volant ( 4 ) étant monté tournant dans le stator ( 6 ) annulaire ou le stator ( 6 ) étant suspendu par rapport à l'arbre ( 3 ) et comprenant un dispositif ( 22 ) de régulation du couple fourni par la machine ( 5 ) électrique à l'arbre ( 3 ) ou du couple de la machine ( 5 ) électrique absorbée par l'arbre ( 3 ) de manière à s'opposer aux balourds de l'arbre ( 3 )
**caractérisé en ce que** le dispositif ( 22 ) de régulation est, pour la détection des balourds, relié à un capteur ( 24 ) de courant pour la mesure du courant entrant ou sortant de la machine ( 5 ).

2. Dispositif ( 1, 30, 40 ) d'entraînement suivant la revendication 1, **caractérisé en ce que** le système ( 9 ) d'excitation est monté sur un côté ( 10 ) périphérique et/ou sur au moins un côté ( 11 ou 12 ) frontal du volant ( 4 ).

3. Dispositif ( 1, 30, 40 ) d'entraînement suivant l'une des revendications précédentes, **caractérisé en ce que** la machine
( 5 ) électrique est telle qu'elle peut fonctionner en moteur pour l'entraînement de l'arbre ( 3 ).

4. Dispositif ( 1, 30, 40 ) d'entraînement suivant la revendication 3, **caractérisé en ce que** la machine ( 5 ) électrique est conçue de manière à ce que le moteur ( 2 ) à combustion interne puisse être démarré par elle en fonctionnement moteur par l'entraînement de l'arbre ( 3 ).

5. Dispositif ( 1, 30, 40 ) d'entraînement suivant la revendication 3 ou 4, **caractérisé en ce que** la machine ( 5 ) électrique est conçue, en outre ou en variante, de manière à ce que, lorsque l'arbre ( 3 ) est entraîné par le moteur ( 2 ) à combustion interne, un couple supplémentaire puisse être appliqué à l'arbre ( 3 ) au moyen de la machine ( 5 ) électrique en fonctionnement moteur.

6. Dispositif ( 1, 30, 40 ) d'entraînement suivant l'une des revendications précédentes, **caractérisé en ce que** la machine ( 5 ) électrique est conçue, en outre ou en variante, de manière à pouvoir fonctionner en génératrice entraînée par l'arbre ( 3 ) pour l'alimentation en courant d'au moins un utilisateur électrique ou d'un accumulateur ( 21 ) d'énergie.

7. Dispositif ( 1, 30, 40 ) d'entraînement suivant la revendication 1, **caractérisé en ce que** le moteur ( 2 ) à combustion interne peut être accouplé à une charge ( P ) par l'arbre ( 3 ) sans interposition d'un accouplement élastique.

8. Dispositif ( 1, 30, 40 ) d'entraînement suivant l'une des revendications précédentes, **caractérisé en ce que** le volant ( 4 ) est monté sur l'arbre ( 3 ) entre le moteur ( 2 ) à combustion interne et une charge ( P ) et **en ce qu'**un accouplement ( 13 ) est monté entre le moteur ( 2 ) à combustion interne et le volant ( 4 ) pour séparer le moteur ( 2 ) à combustion interne de l'arbre ( 3 ).

9. Dispositif ( 1, 30, 40 ) d'entraînement suivant l'une des revendications précédentes, **caractérisé en ce que** le système ( 9 ) d'excitation et le volant ( 4 ) forment une unité intégrée de manière à ce que le volant ( 4 ) forme le rotor ( 7 ) de la machine ( 5 ) électrique.

10. Utilisation du dispositif ( 1, 30, 40 ) d'entraînement suivant l'une des revendications précédentes dans un véhicule, notamment dans un véhicule automobile, pour l'entraînement de roues du véhicule automobile ou, dans un véhicule se déplaçant dans l'eau, pour l'entraînement d'une hélice.
